## Europäisches Patentamt
## European Patent Office
## Office européen des brevets

(19)

(11) Veröffentlichungsnummer: **0 026 907**
**B1**

(12)

# EUROPÄISCHE PATENTSCHRIFT

(45) Veröffentlichungstag der Patentschrift:
31.07.85

(21) Anmeldenummer: 80105907.2

(22) Anmeldetag: 30.09.80

(51) Int. Cl.⁴: **C 08 F 220/12** // C09J3/14,
(C08F220/12, 220:56, 220:04,
222:02)

(54) Verwendung von Acrylpolymerisaten als Schmelzkleber.

(30) Priorität: 06.10.79 DE 2940649

(43) Veröffentlichungstag der Anmeldung:
15.04.81 Patentblatt 81/15

(45) Bekanntmachung des Hinweises auf die Patenterteilung:
31.07.85 Patentblatt 85/31

(84) Benannte Vertragsstaaten:
AT BE CH DE FR GB IT LI NL SE

(56) Entgegenhaltungen:
SU - A - 183 387
US - A - 3 726 739

(73) Patentinhaber: HOECHST AKTIENGESELLSCHAFT,
Postfach 80 03 20, D-6230 Frankfurt am Main 80 (DE)

(72) Erfinder: Fischer, Hannes, Dr., Bachstrasse 22,
D-6204 Taunusstein (DE)
Erfinder: Zimmermann, Rolf, Dr., Pfahlerstrasse 35,
D-6200 Wiesbaden (DE)

BUNDESDRUCKEREI BERLIN

**Beschreibung**

Die vorliegende Erfindung betrifft Schmelzkleber, insbesondere Haftschmelzkleber.

In der Klebstoffindustrie werden anstelle der bisher üblichen Klebstofflösungen in neuerer Zeit in zunehmendem Maße Schmelzkleber eingesetzt, die wegen des Fehlens organischer Lösungsmittel toxikologische und ökologische Vorteile bieten. Kunstharze, die für Schmelzklebstoffe eingesetzt werden sollen, müssen gute Klebkraft und Scherfestigkeit aufweisen; sie müssen außerdem eine für die Herstellung und Anwendung ausreichend niedrige Viskosität haben und im geschmolzenen Zustand weitgehend viskositätsstabil sein, um eine einwandfreie Verarbeitbarkeit über längere Zeit zu gewährleisten.

Es ist bekannt, als Schmelzkleber Copolymerisate von Styrol und Acryl- oder Methacrylsäureestern sowie gegebenenfalls polaren, hydrophilen, äthylenisch ungesättigten Monomeren einzusetzen. Diese Produkte weisen gute Hitzestabilität bei 180 bis 200°C auf, sie müssen aber, um dem kalten Fluß niedrig zu halten und gute Wärmestandfestigkeit der Verklebungen zu erreichen, sehr hohe Molgewichte haben. Wegen dieser hohen Molgewichte sind sie sehr hochviskos und von geringer Klebrigkeit, so daß derartige Produkte als Haftkleber nicht geeignet sind. Wird das Molekulargewicht gesenkt, um die Verarbeitbarkeit und die Klebrigkeit zu verbessern, gehen die Scherfestigkeit und die Wärmestandfestigkeit stark zurück.

Es sind auch Klebebänder mit Haftkleber bekannt, die als Kunstharze Copolymerisate aus Acrylestern und polare Gruppen tragenden Comonomeren, insbesondere Acrylsäuren und gegebenenfalls zusätzlich Aminen und/oder Nitrilen enthalten. Diese Lösungsmittel-Klebstoffe haben gute Kleb- und Scherkraft, aber sehr geringe Wärmestandfestigkeit.

Als Kunstharze für Schmelzkleber sind ebenfalls Copolymerisate auf Acrylester-Basis beschrieben, die als polare Comonomere Acrylnitril und Acrylamid enthalten. Diese Produkte haben gute Klebkraft, Scherfestigkeit und Wärmestandfestigkeit. Um diese vorteilhaften Eigenschaften zu erreichen, muß die Viskosität jedoch sehr hoch sein. Dadurch werden Herstellung und Verarbeitung erschwert. Außerdem ist die Mitverwendung von Acrylnitril als Comonomerem ungünstig, da Acrylnitril ein sehr giftiger Stoff ist.

Der vorliegenden Erfindung liegt die Aufgabe zugrunde, einen Schmelzkleber herzustellen, der die Nachteile der erwähnten bekannten Klebstoffe nicht aufweist.

Gegenstand der Erfindung ist ein Schmelzkleber mit guter Wärmestandfestigkeit auf der Basis von Copolymerisaten aus einem überwiegenden Anteil an Acryl- oder Methacrylsäureestern, einem untergeordnetem Anteil an Acryl- oder Methacrylsäureamiden und weiteren Acryl- oder Methacrylsäureverbindungen, der dadurch gekennzeichnet ist, daß die Copolymerisate aus

a) 85 bis 95 Gew.-% Acryl- und/oder Methacrylsäure-alkylestern mit 1 bis 12 C-Atomen im Alkylrest,
b) 3 bis 10, vorzugsweise 4 bis 8 Gew.-% Acryl- und/oder Methacrylamid,
c) 0,2 bis 5, vorzugsweise 0,4 bis 3 Gew.-% olefinisch ungesättigten Mono- oder Dicarbonsäuren mit bis zu 5 C-Atomen,

aufgebaut sind,
wobei die Summe der Prozentangaben jeweils 100 beträgt. Die Alkylreste der Komponente a) können gegebenenfalls verzweigt sein.

Da dieser Schmelzkleber frei von Acrylnitril ist, ist seine Herstellung und Verarbeitung umweltfreundlich. Überraschenderweise zeichnen sich die erfindungsgemäßen Schmelzkleber nicht nur durch gute Klebkraft und Scherfestigkeit, sondern auch durch gute Wärmestandfestigkeit und ausreichende Viskositätsstabilität bei Temperaturen von etwa 180°C aus. Darüberhinaus weisen sie noch eine niedrige Schmelzviskosität auf.

Zweckmäßig enthält der Schmelzkleber, der vorzugsweise in Form eines Haftschmelzklebers vorliegt, eine Komponente a), die aus

a1) mindestens einem Butylacrylat, insbesondere n-Butylacrylat
a2) mindestens einem $C_{6-12}$-Alkylacrylat und
a3) Methylmethacrylat besteht.

Das gegenseitige Gewichtsverhältnis der Komponenten a1) : a2) : a3) beträgt hierbei vorteilhaft (15 bis 35) : (55 bis 85) : (5 bis 15), vorzugsweise (20 bis 30) : (60 bis 75) : (7 bis 12). Andere geeignete Monomere sind z. B. Methyl-, Hexyl-, Octylacrylate, wie 2-Äthylhexylacrylat oder dergleichen.

Die Konsistenz der Copolymerisate hängt naturgemäß von der Zusammensetzung der Monomerenmischung ab. Je höher der Anteil an Monomeren, deren Polymerisate eine niedrige Einfriertemperatur haben, gewählt wird, desto weicher werden die Copolymerisate. Wird der Anteil an Methylmethacrylat erhöht, werden härtere Copolymerisate erhalten. Falls man Methylmethacrylat durch Styrol bzw. Vinyltoluol ersetzen würde, so würde man wie bei Methylmethacrylat-homopolymerisaten Produkte mit hoher Einfriertemperatur erhalten. Diese Maßnahme hätte den weiteren Nachteil, daß die Hitzebeständigkeit der Copolymerisate verschlechtert wird, so daß derartige Produkte für die Praxis nicht geeignet sind.

Geeignete Carbonsäurekomponenten c) sind z. B. Crotonsäure, Itaconsäure, Maleinsäure, Fumarsäure oder dergleichen, vorzugsweise jedoch Acryl- und/oder Methacrylsäure. Bei Erhöhung der Carbonsäure-Konzentration steigen Viskosität und Wärmestandfestigkeit des Polymerisats an, dagegen geht die Oberflächenklebrigkeit zurück.

Die Copolymerisate der erfindungsgemäßen Schmelzkleber sind helle, klar durchsichtige sehr stark klebrige Massen. Die ergeben Schmelzen, die bei der üblichen Verarbeitungstemperatur von 180° C niedrigviskos sind und deren Schmelzviskosität bei dieser Temperatur über mehr als 24 Stunden nahezu unverändert bleibt. Die Schmelzviskosität beträgt im allgemeinen höchstens 80, vorzugsweise höchstens 77, insbesondere höchstens 55 Pa · s/180° C. Die Mindestschmelzviskosität liegt beispielsweise bei 20, vorzugsweise 30, insbesondere 35 Pa · s/180° C. In manchen, jedoch weniger bevorzugten Fällen kann die Mindestschmelzviskosität auch unter 20 Pa · s liegen. Sie liegt damit erheblich niedriger als die der bekannten Haftschmelzkleberharze, die eine vergleichbare Wärmestandfestigkeit haben.

Wegen ihrer niedrigen Schmelzviskosität können die Copolymerisate der erfindungsgemäßen Schmelzkleber in einfacher Weise bei Temperaturen um 180° C verarbeitet werden. Sie eignen sich besonders auch als Haftkleber für Metall, Papier, Karton, Kunststoffolien, Kunststoffplatten, Keramik und ähnliche Werkstoffe. Sie können jeweils allein oder wahlweise in Kombination mit in der Klebstoffindustrie üblichen Zusatzhaaren, beispielsweise Terpenphenolharzen, Polyterpenharzen, Kohlenwasserstoffharzen, z. B. solchen auf Basis von Inden oder Dicyclopentadien oder hydrierten Kohlenwasserstoffharzen und/oder Verschnittmitteln, wie Schwerspat, Kreide, Talkum, Titandioxyd oder Quarzmehl, eingesetzt werden.

Die Copolymerisation der Komponenten a), b) und c) kann als Lösungs- oder Substanzpolymerisation in Gegenwart von Polymerisationsinitiatoren und gegebenenfalls auch von Kettenreglern erfolgen.

Als Polymerisationsinitiatoren eignen sich vor allem Peroxyde, wie Di-tert.-Butylperoxyd, Laurylperoxyd, Di-cumyl-peroxyd, Cumolhydroperoxyd, tert.-Butylhydroperoxyd, tert.-Butylperbenzoat, tert.-Butylperoctoat, Dibenzoyl-peroxyd, Methyläthylketonperoxyd, jeweils einzeln oder im Gemisch, oder Azoisobuttersäuredinitril in Mengen von 0,1—3, vorzugsweise 0,3—1 Gew.-%, bezogen auf die Komponenten a)—c).

Die Polymerisation kann ansatzweise oder durch allmähliche, dosierte Zugabe der Ausgangsstoffe erfolgen. Im zuletzt genannten Fall können bei der dosierten Zugabe Block- oder Pfropf-Polymerisate erhalten werden. Besonders günstige Ergebnisse werden bei der ansatzweisen Copolymerisation in Gegenwart von Lösungsmitteln erhalten. Bei der Herstellung der erfindungsgemäßen Haftschmelzkleber werden die Lösungsmittel in der Regel nach Beendigung der Polymerisation durch Destillation bei erhöhter Temperatur, d. h. bis zu etwa 200° C, gegebenenfalls unter vermindertem Druck, entfernt.

Geeignete Lösungsmittel sind z. B. aromatische Kohlenwasserstoffe — wie Toluol und Xylol und deren Mischungen mit gesättigten Kohlenwasserstoffen, wie Cyclohexan oder Benzinfraktionen — und/oder gegebenenfalls Alkohole. Da einige Lösungsmittel, beispielsweise aromatische Kohlenwasserstoffe oder Alkohole, kettenabbrechend wirken können, läßt sich durch die Auswahl des verwendeten Lösungsmittelgemisches das Molekulargewicht bzw. die Viskosität der Copolymerisate und damit der Haftschmelzkleber beeinflussen.

In den folgenden Beispielen sind T Gewichtsteile und % jeweils Gewichtsprozent. Die Säurezahl (SZ) wurde jeweils nach DIN 53 402 bestimmt.

Beispiele

I. Herstellung der Copolymerisate

1. Ein Gemisch aus 1 T Acrylsäure, 6 T Acrylamid, 9 T Methylmethacrylat, 60 T 2-Äthylhexylacrylat und 23 T Butylacrylat wird in einer Mischung aus Toluol, Cyclohexan und Isobutanol unter Einsatz von 0,5 T Di-tert.-Butylperoxyd bei 100 bis 130° C copolymerisiert. Das Lösungsmittelgemisch wird durch Destillation, zuletzt bei 180 bis 190° C unter vermindertem Druck (<50 mbar) entfernt. Die Polymerisatausbeute beträgt mehr als 99%. Das erhaltene Endprodukt hat eine Schmelzviskosität von 45 Pa · s bei 180° C und eine SZ von 6. Die Glasübergangstemperatur beträgt — 45° C.

2. Die in Beispiel 1 beschriebene Polymerisation wird unter Zusatz von 1% n-Dodecylmercaptan als Molekulargewichtregler wiederholt. Das erhaltene Copolymerisat hat eine Schmelzviskosität von 25 Pa · s bei 180° C, eine SZ von 6 und eine Glasübergangstemperatur von —47° C.

3. Die 75%ige Lösung eines Monomerengemisches aus 1 T Acrylsäure, 4,5 T Acrylamid, 8,5 T Methylmethacrylat, 63 T 2-Äthylhexylacrylat und 21 T Butylacrylat in einer Mischung aus Toluol, Cyclohexan und Isobutanol wird in der unter Beispiel 1 angegebenen Weise bei 110 bis 130° C copolymerisiert und anschließend durch Destillation, zuletzt unter vermindertem Druck, vom Lösungsmittel befreit.

Das erhaltene Copolymerisat hat eine Schmelzviskosität von 21 Pa · s bei 180° C, eine SZ von 6 und eine Glasübergangstemperatur von —50° C.

0 026 907

4. Eine 70%ige Lösung eines Monomerengemisches, bestehend aus 0,9 T Acrylsäure, 6,8 T Acrylamid, 70 T 2-Äthylhexylacrylat und 23 T Butylacrylat in einer Mischung aus Toluol, einer Benzinfraktion, die im Bereich zwischen 80 und 110°C siedet, und Isobutanol wird in der in Beispiel 1 angegebenen Weise copolymerisiert. Der Ansatz wird, wie in Beispiel 1 angegeben, durch Destillation vom Lösungsmittel befreit. Das Endprodukt hat eine Schmelzviskosität von 39 Pa · s bei 180°C und eine SZ von 6.

5. Nach dem im Beispiel 1 angegebenen Verfahren werden 0,5 T Acrylsäure, 6 T Acrylamid, 9 T Methylmethacrylat, 60 T 2-Äthylhexylacrylat und 25 T Butylacrylat copolymerisiert. Nach der Aufarbeitung wird mit einer Ausbeute von über 98%, berechnet auf eingesetzte Monomere, ein Copolymerisat erhalten, das eine Schmelzviskosität von 40 Pa · s bei 180°C und eine Glasübergangstemperatur von −42°C hat und eine SZ von 3.

6. In der in Beispiel 1 beschriebenen Weise werden 2,9 T Acrylsäure, 5,8 T Acrylamid, 8 T Methylmethacrylat, 62 T 2-Äthylhexylacrylat und 21 T Butylacrylat copolymerisiert. Nach Abtrennung des Lösungsmittels beträgt die Polymerisatausbeute, bezogen auf eingesetzte Monomere, über 98%. Das erhaltene zähelastische Kunstharz hat eine Schmelzviskosität von 34 Pa · s bei 180°C. Die Einfriertemperatur liegt bei −43°C, die SZ bei 17,7.

7. In der im Beispiel 1 beschriebenen Weise werden 1 T Methacrylsäure, 6 T Acrylamid, 8 T Methylmethacrylat, 65 T 2-Äthylhexylacrylat und 21 T Butylacrylat copolymerisiert. Die Ausbeute, bezogen auf eingesetzte Monomere, beträgt 98%. Das bei dieser Zusammensetzung erhaltene Endprodukt hat eine Schmelzviskosität von 32 Pa · s bei 180°C, eine Glasübergangstemperatur von −47°C und eine SZ von 5.

8. Nach dem im Beispiel 1 beschriebenen Verfahren werden 1 T Acrylsäure, 6 T Acrylamid, 5 T Äthylmethacrylat, 70 T Laurylmethacrylat und 18 T n-Butylacrylat copolymerisiert. Die Polymerisatausbeute beträgt, bezogen auf eingesetzte Monomere, über 98%. Das erhaltene Kunstharz hat eine Schmelzviskosität von 45 Pa · s bei 180°C, eine Glasübergangstemperatur von −46°C und eine SZ von 6.

9. In der im Beispiel 1 beschriebenen Weise werden 0,9 T Acrylsäure, 6,3 T Acrylamid, 60 T 2-Äthylhexylacrylat und 32 T Butylacrylat polymerisiert. Die Ausbeute beträgt, bezogen auf eingesetzte Monomere, 99%. Das erhaltene Kunstharz hat eine Schmelzviskosität von 41 Pa · s bei 180°C und eine SZ von 7.

## II. Physikalische Prüfung

Die nach den Beispielen 1 bis 9 hergestellten Copolymerisate werden einer anwendungstechnischen Vergleichsprüfung als Schmelzhaftkleber unterworfen. Dabei wurden folgende Eigenschaften geprüft, die, wie oben erwähnt, für Schmelzhaftkleber besonders wichtig sind:

a) Klebkraft
b) Scherfestigkeit
c) Tack
d) Fließneigung
e) Hitzestabilität

Die bei diesen Prüfungen erhaltenen Werte sind in der untenstehenden Tabelle zusammengefaßt. Die Messungen würden wie folgt durchgeführt und bewertet:

### a) Klebkraft

Die Klebkraft wird bestimmt, indem ein Polyäthylenterephthalatfolienstreifen, der mit 25 g des zu untersuchenden Klebharzes je m² beschickt ist, auf Chrom-Nickel-Stahl (V2A) aufgewalzt und nach 5 Minuten wieder abgezogen wird. Die aufzuwendende Kraft wird gemessen, sie soll für gute Schmelzhaftkleber mehr als 3 N/cm betragen.

### b) Scherfestigkeit

Zur Bestimmung der Scherfestigkeit wird eine Polyäthylenterephthalatfolie, die mit 25 g des zu untersuchenden Klebharzes je m² beschichtet ist, auf Chrom-Nickel-Stahl geklebt und mit einem Gewicht von 600 g pro cm² Klebfläche statisch belastet. Als Maß für die Scherfestigkeit wird die Zeit angegeben, nach der sich die Folie unter der Gewichtsbelastung vom Untergrund löst. Für dem Stand der Technik entsprechende Haftschmelzkleber werden Zeiten von mindestens 300 Minuten gefordert.

4

### c) Tack

Der Tack wird durch die Rolling-Ball-Methode bestimmt, in der der Bremsweg einer definierten Kugel auf einem Polyäthylenterephthalatfolienstreifen gemessen wird, der mit dem zu untersuchenden Klebharz beschichtet ist. Der Wert wird in cm angegeben; er soll für Haftschmelzkleber 20 cm nicht wesentlich überschreiten. Bei sehr guter Scherfestigkeit sind Abweichungen nach oben zulässig.

### d) Fließneigung

Zur Bestimmung der Fließneigung wird eine kugelförmige 5 g Probe des zu untersuchenden Klebharzes auf eine Glasplatte gelegt. Diese Probe wird 30 Minuten bei 70°C in einem Winkel von 105° in einen Wärmeschrank gestellt. Anschließend wird die Strecke gemessen, die die Substanzprobe in dieser Zeit auf der Platte zurückgelegt hat. Der Wert wird in cm angegeben; er soll für Klebharze, die dem Stand der Technik entsprechen, den Wert 5 cm nicht überschreiten.

### e) Hitzestabilität

Zur Bestimmung der Hitzestabilität wird eine Probe des zu untersuchenden Klebharzes von ca. 150 g, die 0,1% eines Alterungsschutzmittels, beispielsweise ein Handelsprodukt in Form eines Phenoläther-derivats enthält, 24 Stunden bei 180°C im Trockenschrank gelagert. Die Harzschmelze soll nach dieser Zeit fließfähig und frei von gelierten Anteilen sein. Die Viskositätsänderung gegenüber dem Ausgangswert darf bei Schmelzklebharzen, die dem Stand der Technik entsprechen, 20%, berechnet auf den Ausgangswert, nicht übersteigen.

Die Prüfergebnisse sind nachstehender Tabelle zu entnehmen.

**Physikalische Eigenschaften der Schmelzkleber**

| | Klebharze nach Beispiel | | | | | | | | |
|---|---|---|---|---|---|---|---|---|---|
| | 1 | 2 | 3 | 4 | 5 | 6 | 7 | 8 | 9 |
| Klebkraft, N/cm | 3,2 | 3 | 3,5 | 4,5 | 3,1 | 3 | 3,1 | 3,7 | 4,8 |
| Scherfestigkeit, min. | 420 | 320 | 300 | 305 | 315 | >1400 | 420 | 310 | 300 |
| Rolling-Ball-Tack, cm | 20 | 15 | 5 | 20 | 20 | 21 | 23 | 17 | 20 |
| Fließneigung, cm | 1,4 | 1,7 | 3,9 | 1,9 | 1,7 | 1,3 | 1,2 | 2,3 | 1,6 |
| Hitzestabilität, 24 h/180°C | in Ordnung | in Ordnung | in Ordnung | in Ordnung | in Ordnung | in Ordnung | in Ordnung | in Ordnung | in Ordnung |

0 026 907

**Patentansprüche**

1. Verwendung von Copolymerisaten aus

a)   85 bis 95 Gew.-% Acryl- und/oder Methacrylsäure-alkylestern mit 1 bis 12 C-Atomen im Alkylrest,
b)   3 bis 10 Gew.-% Acryl- und/oder Methacrylat und
c)   0,2 bis 5 Gew.-% olefinisch ungesättigten Mono- oder Dicarbonsäuren mit bis zu 5 C-Atomen,

wobei die Summe der Prozentangaben jeweils 100 beträgt, als Schmelzkleber mit guter Wärmestandfestigkeit.

2. Ausführungsform nach Anspruch 1, dadurch gekennzeichnet, daß die Komponente a) aus

a1)   mindestens einem Butylacrylat,
a2)   mindestens einem C$_{6-12}$-Alkylacrylat und
a3)   Methylmethacrylat besteht.

3. Ausführungsform nach Anspruch 2, dadurch gekennzeichnet, daß das Gewichtsverhältnis der Komponenten a1) : a2) : a3) (15 bis 35) : (55 bis 85) : (5 bis 15), vorzugsweise (20 bis 30) : (60 bis 75) : (7 bis 12) ausmacht.

4. Ausführungsform nach einem oder mehreren der Ansprüche 1 bis 3, dadurch gekennzeichnet, daß die Komponente c) Acryl- und/oder Methacrylsäure ist.

5. Ausführungsform nach einem oder mehreren der Ansprüche 1 bis 4, dadurch gekennzeichnet, daß die Copolymerisate eine Schmelzviskosität von höchstens 80, vorzugsweise höchstens 77, insbesondere höchstens 55 Pa · s/180° C aufweisen.

6. Ausführungsform nach einem oder mehreren der Ansprüche 1 bis 5, dadurch gekennzeichnet, daß der Schmelzkleber zusätzlich ein weiteres Harz enthält.

7. Ausführungsform nach einem oder mehreren der Ansprüche 1 bis 6, wobei der Schmelzkleber als Haftschmelzkleber vorliegt.

**Claims**

1. Use of copolymers based on

a)   85 to 95% by weight of alkyl esters of acrylic and/or methacrylic acid having 1 to 12 carbon atoms in the alkyl radical,
b)   3 to 10% by weight of an amide of acrylic and/or methacrylic acid and
c)   0.2 to 5% by weight of olefinically unsaturated mono- or dicarboxylic acids having up to 5 carbon atoms,

wherein the total of the percentages is always 100 as hot melt adhesive having a good heat stability.

2. Embodiment according to claim 1, characterized in that component a) consists of

a1)   at least one butyl acrylate,
a2)   at least one alkyl acrylate having from 6 to 12 carbon atoms in the alkyl radical and
a3)   methylmethacrylate.

3. Embodiment according to claim 2 characterized in that the weight ratio of components a1) : a2) : a3) is in the range from (15−35) : (55−85) : (5−15), preferably (20−30) : (60−75) : (7−12).

4. Embodiment according to one or more of claims 1 to 3, characterized in that component c) is acrylic and/or methacrylic acid.

5. Embodiment according to one or more of claims 1 to 4, characterized in that the copolymers have a melt viscosity of at most 80, preferably at most 77, especially at most 55 Pa · s/180° C.

6. Embodiment according to one or more of claims 1 to 5, characterized in that the melt adhesive contains additionally a further resin.

7. Embodiment according to one or more of claims 1 to 6 wherein the melt adhesive is an adhering melt adhesive.

**Revendications**

1. Application de copolymères constitués:

a)   de 85 à 95% en poids d'acrylate et/ou de méthacrylate d'alkyles contenant de 1 à 12 atomes de carbone dans la partie alkyle,

b) de 3 à 10% en poids d'acrylamide et/ou de méthacrylamide de
c) de 0,2 à 5% en poids d'acides monocarboxyliques ou dicarboxyliques éthyléniques contenant au plus 5 atomes de carbone,

la somme des pourcentages indiqués étant à chaque fois égale à 100, comme adhésifs thermofusibles ayant une bonne stabilité dimensionnelle à chaud.

2. Mode d'exécution selon la revendication 1, caractérisé en ce que la composante a) est constituée:

a1) d'au moins un acrylate de butyle,
a2) d'au moins un acrylate d'alkyle en $C_6-C_{12}$ et
a3) de méthacrylate de méthyle.

3. Mode d'exécution selon la revendication 2, caractérisé en ce que le rapport pondéral des composantes a1), a2) et a3) est situé dans la gamme (15 à 35) : (55 à 85) : (5 à 15), de préférence (20 à 30) : (60 à 75) : (7 à 12).

4. Mode d'exécution selon l'une quelconque des revendications 1 à 3, caractérisé en ce que la composante c) est l'acide acrylique et/ou l'acide méthacrylique.

5. Mode d'exécution selon l'une quelconque des revendications 1 à 4, caractérisé en ce que les copolymères ont une viscosité à l'état fondu d'au plus 80 Pa · s à 180°C, de préférence d'au plus 77 ou, mieux encore, d'au plus 55.

6. Mode d'exécution selon l'une quelconque des revendications 1 à 5, caractérisé en ce que l'adhésif thermofusible contient une résine supplémentaire.

7. Mode d'exécution selon l'une quelconque des revendications 1 à 6, selon lequel l'adhésif thermofusible est un adhésif de contact thermofusible.